# EUROPEAN PATENT SPECIFICATION

(11) **EP 2 142 829 B1**
(45) Date of publication and mention of the grant of the patent: **13.07.2011**
(21) Application number: 07736746.4
(22) Date of filing: 30.03.2007
(51) Int. Cl.: F16K 11/078, E03C 1/04

(54) **TAP**
HAHN
ROBINET

(43) Date of publication of application: 13.01.2010
(73) Proprietor: CRS S.p.A., 20121 Milano (IT)
(72) Inventor: CRISTINA, Alberto, 20121 Milano (IT); BAKI, Gyozo, 20121 Milano (IT)
(74) Representative: Mitola, Marco
(86) International application number: PCT/IT2007/000242
(87) International publication number: WO 2008/120252

(56) References cited:
- EP-A- 0 681 127
- EP-A- 0 716 255
- EP-A- 1 036 973
- EP-A- 1 081 297
- EP-A- 1 496 164
- DE-A1- 3 119 313
- US-A- 6 073 972

## Description

The present invention relates to a tap, and in particular, a tap provided with a fixing element suitable for the fluid-seal locking of the ends of flexible pipes in the tap body. It should be noted that tap generally refers to any means, for example of the valve type, suitable for intercepting and distributing fluids, such as water.

As known, water outlets in taps are connected to tap bodies by pipes, preferably flexible. The pipes are usually inserted and sealingly screwed in ends of the tap bodies and in particular in ends of mixing cartridges fitted in the tap bodies. Moreover at opposite ends, the flexible pipes are usually screwed to water outlets, too. Typically, taps are provided with two flexible pipes, for the hot water and the cold water outlets, respectively.

Prior art solutions exhibit several disadvantages. In fact, due to the presence of the threaded connections at both ends of the flexible pipes, during assembly the pipes get twisted and the connections themselves could loosen, thus causing harmful water leaks.

Moreover, during normal maintenance operations that could require the removal of one of the two ends of the flexible pipe, the unintentional unscrewing or loosening of the other end of the pipe or in any case, the twisting and the consequent damaging of the pipe itself could occur.
Taps of this type are known from the documents US 6073972, EP 0681127 and EP 1496164.

The problem of the present invention is to provide a connection for pipes which should solve the disadvantages mentioned with reference to the prior art.

Such disadvantages are solved by a tap in accordance with claim 1.

Further embodiments of the fixing element according to the invention are described in the following claims.

Further features and advantages of the present invention will appear more clearly from the following description of a preferred non-limiting embodiment, wherein:

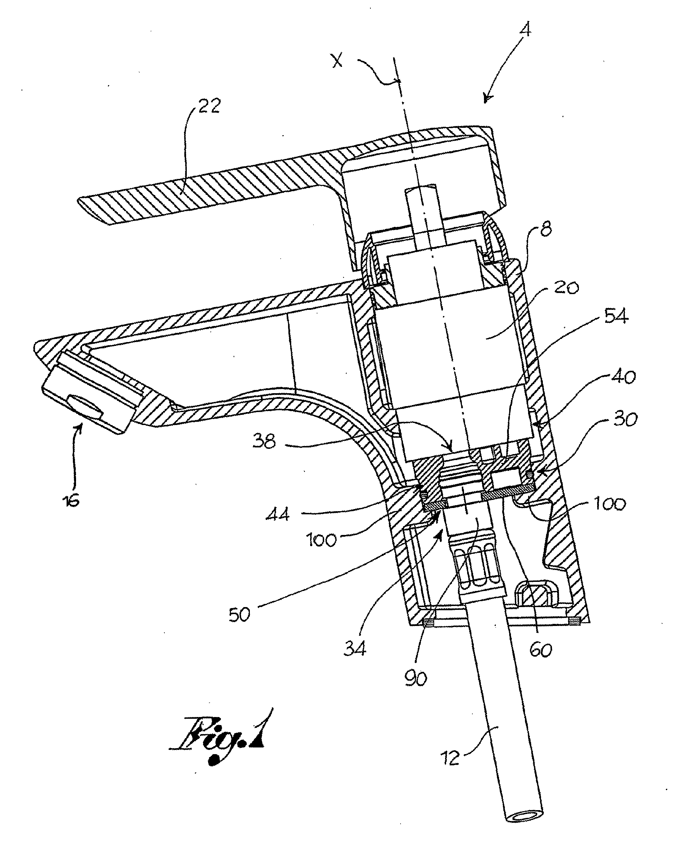

figure 1 shows a section view in assembled configuration of a tap comprising a fixing element according to an embodiment of the present invention;

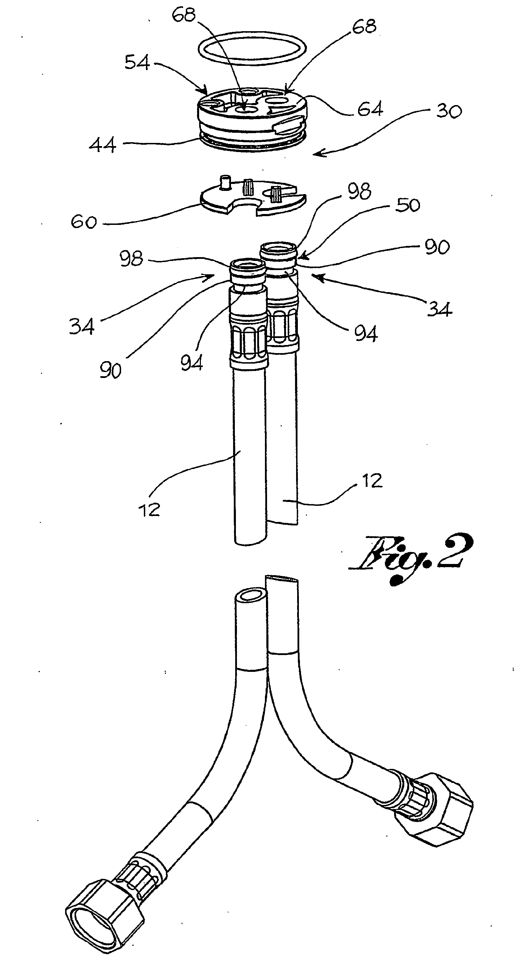

figure 2 shows an exploded perspective view of some details of the tap of figure 1;

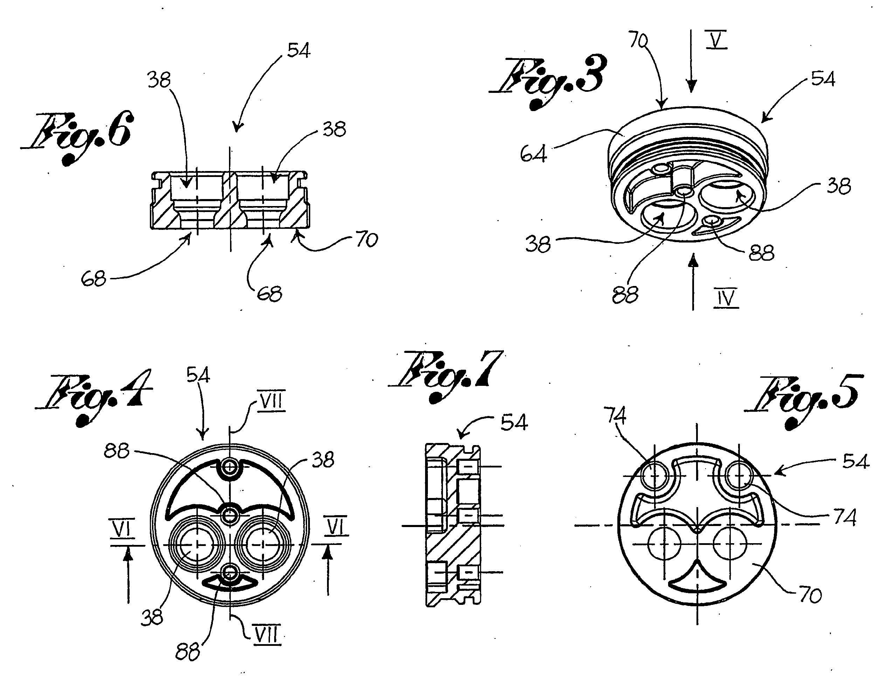

figure 3 shows a perspective view of a detail of figure 1;

figure 4 shows a plan view of the detail of figure 3 from the side of arrow IV of figure 3;

figure 5 shows a plan view of the detail of figure 3 from the side of arrow V of figure 3;

figure 6 shows a section view of the detail of figure 3, along plane VI-VI of figure 4;

figure 7 shows a section view of the detail of figure 3, along plane VII-VII of figure 4;

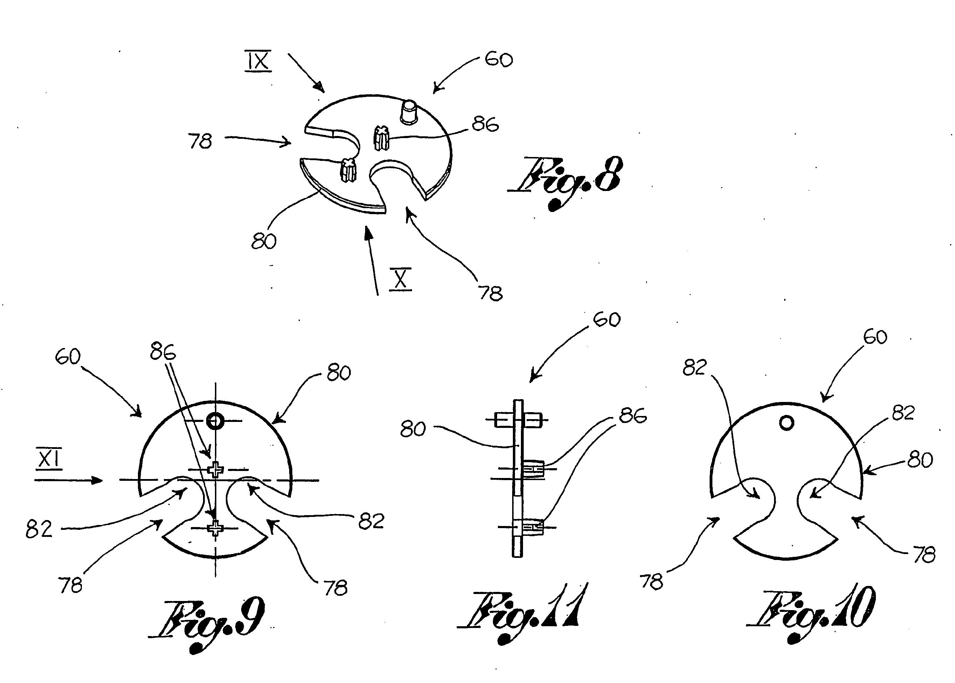

figure 8 shows a perspective view of a detail of figure 1;

figure 9 shows a plan view of the detail of figure 8 from the side of arrow IX of figure 8;

figure 10 shows a plan view of the detail of figure 8 from the side of arrow X of figure 8;

figure 11 shows a side view of the detail of figure 8, from the side of arrow XI of figure 9.

With reference to the above figures, reference numeral 4 generally denotes a tap comprising a tap body 8 with prevailing extension X suitable for receiving water from at least one outlet piping 12 and for dispensing it through a dispensing outlet 16. Tap generally refers to any means, for example of the valve type, suitable for intercepting and distributing fluids, such as water.

Tap 4 comprises water collecting and/or mixing means 20 in fluid connection in input with the outlet piping 12 and in output with the dispensing outlet 16. According to an embodiment, the water collecting and/or mixing means comprise a mixing cartridge, actuable by a control lever 22. Collecting and/or mixing means also indicate baffle type cartridges or devices with opening and closing function, of progressive type or on-off type.

Advantageously, tap 4 comprises a coupling element 30 suitable for constraining, with hydraulic seal, a delivery end 34 of said pipes 12 and for connecting them to said water collecting and/or mixing means 20.

The coupling element 30 comprises at least one seat 38 suitable for obtaining a shape coupling with said delivery end 34 of the outlet pipes, so as to allow a relative rotation between the delivery end 34 of the pipe and seat 38 which preventing an axial movement of extraction of the delivery end 34 from the relevant seat 38.

According to a possible embodiment, the coupling element 30 is integral with the tap body 8.

According to a further embodiment, the coupling element 30 is mechanically separate from the tap body 8 and is associable to a water collecting chamber 40 of the tap body. Said chamber 40 is suitable for seating the collecting means 20, typically a mixing cartridge.

Preferably, the coupling element 30 is directly associated to the collecting and/or mixing means 20 so as to ensure a fluid connection between pipes 12 and the collecting means 20.

According to a further embodiment, the coupling element 30 is made integral with the collecting and/or mixing means 20; in other words, the mixing cartridge, opposite the relevant control lever 22, is made integral with the coupling element 30.

According to an embodiment, the at least one seat 38 of the coupling element 30 is axially open along said prevailing extension X, so as to allow an axial introduction of the delivery end 34 directly into seat 38.

For example, the delivery end 34 makes a snap-wise shape coupling with seat 38.

According to a further embodiment, the delivery end 34 makes a joint-wise shape coupling with seat 38.

According to a possible embodiment, the at least one seat 38 is laterally open along said prevailing extension X, so as to allow a aside introduction of end 34 of the pipe into seat 38 through an outer side wall 44 of the coupling element 30.

Preferably, end 30 and seat 38 are respectively counter-shaped relative to one another, so as to determine at least one undercut 50 relative to said prevailing extension X; undercut 50 is suitable for obtaining an axial locking of the coupling end 30 and for preventing an axial movement of extraction of end 30 from seat 38 itself.

The coupling element 30 is comprised of at least two portions, and comprises a base 54 and a bottom 60 sealingly associated to one another.

Base 54 comprises a base body 64 having at least one fluid connection hole 68 with the associable collecting and/or mixing means 20 and at least one seat 38 suitable for seating said delivery end 34.

Base 54 is sealingly associated to the collecting and/or mixing means 20.

According to the invention, on the end of the collecting and/or mixing means 20, base 54 comprises a seal suitable for ensuring water seal at a connection wall 70 with the collecting and/or mixing means 20.

At the connection wall 70, base 54 comprises first joint-wise connection means 74, suitable for axially locking base 54 e and the collecting and/or mixing means 20 to each other. For example, the first connection means 74 comprise holes suitable for coupling joint-wise with special pegs or pins of the mixing cartridge 20 or vice versa.

bottom 60 comprises at least one opening 78 open at a side wall 80 of bottom 60, so as to allow the side introduction of the end of pipe 34.

Opening 78 narrows moving from side wall 80 inwards of the bottom so as to allow the introduction of end 34 at the side wall 80 and axially lock into position the end of pipe 34 following the introduction thereof into opening 78 itself. In other words, opening 78 exhibits a bottom 82 suitable for making an axial constraint to the extraction of the delivery end 34.

According to the invention, bottom 60 is associated to base 54, opposite the collecting and/or mixing means 20, by second joint-wise connection means 86, such as teeth, preferably inserted by forcing into special holes 88 of base 54. According to a further embodiment, bottom 60 is associated to base 54, opposite the collecting and/or mixing means 20, by snap-wise connection means.

According to a possible embodiment, the delivery end 34 comprises a cylindrical portion 90 suitable for being inserted in seat 38 and a collar suitable for making an undercut for axially constraining the end to seat 38.

According to a further possible embodiment, the delivery end 34 comprises a cylindrical portion 90 suitable for being inserted in seat 38 and a circular groove 94 suitable axially constraining end 30 to seat 38.

Preferably, ends 34 comprise at least one sealing element 98 suitable for obtaining the water seal with the respective seat. For example, the sealing element 98 is an o-ring seal.

According to a possible embodiment, relative to said prevailing extension X, the sealing element is arranged at the shape coupling between seat 38 and end 30.

According to a possible further embodiment, relative to said prevailing extension X, the sealing element 98 is arranged in a portion comprised between seat 38 and the water collecting and/or mixing means 20.

Preferably, the tap body 8 comprises at least one stop 100 suitable for making an axial stop to the introduction of the collecting and/or mixing means 20.

According to an embodiment, said stop 100 comprises side openings suitable for making seats for locking said delivery ends of the pipes.

The assembly and the removal of a tap according to the present invention will now be described.

In particular, the flexible pipe ends are connected for example to the bottom, by the side openings and the bottom is axially associated to the base so as to close the coupling element pack-wise. The coupling element is then inserted into the tap body up to abutment against the tap body stop.

The mixing cartridge is then inserted and is fluid connected to the base of the coupling element which axially locks the coupling element against the tap body.

The same assembly operations may be carried out in the reverse order to disassemble.

To upgrade the prior art taps according to the present invention, it is sufficient to replace the flexible pipes with threaded connections with a coupling element according to the present invention provided with the relevant flexible pipes having counter-shaped ends relative to the seats of the fixing element.

The fixing element may be adapted to the existing tap cartridge, or the mixing cartridge group with relevant fixing element may be replaced. Such replacement may be necessary, for example when the axial overall dimensions of the fixing element to be applied to the existing cartridge are larger than the inside dimensions of the tap body.

As we can appreciate from the description, the tap of the present invention allows overcoming the disadvantages exhibited by the taps of the prior art.

In particular, the fixing element allows quick assembly of the flexible pipes without requiring any screwing action at the connections to the tap body.

The connection between the fixing element and the pipes allows the pipe rotation without any risk of loosening and consequent water leak.

Assembly is very quick to be carried out and always ensures the axial locking of the pipe that cannot draw out of the relevant seat in any way.

The system according to the present invention is inexpensive to make and does not require making threaded ends in the pipes.

Moreover, it is possible to make fixing elements also free from threads and thereby inexpensive to make.

Also the costs for making the pipes are thereby reduced.

Moreover, the system of the present invention may be adapted to existing tap bodies, without requiring structural modifications of the tap bodies.

In fact, it is possible to associate a mixing cartridge to a fixing element according to the present invention and then replace the flexible pipe with a pipe having a counter-shaped end relative to the seats of the fixing element.

A man skilled in the art may make several changes and adjustments to the fixing elements described above in order to meet specific and incidental needs, all falling within the scope of protection defined in the following claims.

## Claims

1. Tap (4) comprising
a tap body (8) with prevailing extension (X) suitable for receiving water from at least one outlet piping (12) and for dispensing it through a dispensing outlet (16), water collecting and/or mixing means (20) in fluid connection in input with the outlet piping (12) and in output with the dispensing outlet (16)
wherein
the tap (4) comprises a coupling element (30) suitable for constraining, with hydraulic seal, a delivery end (34) of said pipes (12) and for connecting them to said water collecting and/or mixing means (20),
said coupling element (30) is comprised of at least two portions, and comprises a base (54) and a bottom (60) sealingly associated to one another, wherein said base (54) comprises a base body (64) having at least one fluid connection hole (68) with the associable collecting and/or mixing means (20) and at least one seat (38) suitable for seating said delivery end (34),
wherein the bottom (60) is associated to the base (54), opposite the collecting and/or mixing means (20), by second joint-wise connection means (86),
wherein said bottom (60) comprises at least one opening (78) open at a side wall (80) of the bottom (60), so as to allow the side introduction of the pipe end (34), and
wherein said base (54) is sealingly associated to the collecting and/or mixing means (20), wherein on the end of the collecting and/or mixing means (20), the base (54) comprises a seal suitable for ensuring water seal at a connection wall (70) with the collecting and/or mixing means (20),
the coupling element (30) comprising at least one seat (38) suitable for obtaining a shape coupling with said delivery end (34) of the outlet pipes, so as to allow a relative rotation between the delivery end (34) of the pipe and seat (38) which prevents an axial movement of extraction of the pipe end (34) from the relevant seat (38) **characterised in that** at the connection wall (70), base (54) comprises first joint-wise connection means (74), suitable for axially locking base (54) and the collecting and/or mixing means (20) to each other, wherein said opening (78) narrows moving from the side wall (80) inwards so as to axially lock into position the pipe end (34).

2. Tap (4) according to claim 1, wherein said coupling element (30) is integral with the tap body (8).

3. Tap (4) according to claim 1, wherein said coupling element (30) is mechanically separate from the tap body (8) and is associable to a water collecting chamber (40) of the tap body (8).

4. Tap (4) according to claim 1, 2 or 3, wherein said coupling element (30) is directly associated to the collecting and/or mixing means (20) so as to ensure a fluid connection between pipes (12) and the collecting means (20).

5. Tap (4) according to any one of the previous claims, wherein the at least one seat (38) of the coupling element (30) is axially open along said prevailing extension (X), so as to allow an axial introduction of the end (34) directly into the seat (38).

6. Tap (4) according to any one of claims 1 to 5, wherein said end (34) makes a snap-wise shape coupling or a joint-wise shape coupling with the seat (38).

7. Tap (4) according to any one of the previous claims, wherein the at least one seat (38) is laterally open along said prevailing extension (X), so as to allow a side introduction of the end (34) of the pipe (12) into the seat (38) through an outer side wall (44) of the coupling element (30).

8. Tap (4) according to any one of the previous claims, wherein the end (34) and the seat 38 are respectively counter-shaped relative to one another, so as to determine an undercut (50) relative to said axial direction, suitable for obtaining an axial locking of the end (34) of the pipe and for preventing an axial movement of extraction of the end (34) from the seat (38) itself.

9. Tap (4) according to any one of the previous claims, wherein the end (34) comprises a cylindrical portion (90) suitable for being inserted in the seat (38) and a collar suitable for making an undercut (50) for axially constraining the end (34) to the seat (38).

10. Tap (4) according to any one of claims 1 to 8, wherein the end (34) comprises a cylindrical portion (90) suitable for being inserted in the seat (38) and a circular groove (94) suitable for axially constraining the end (34) to the seat (38).

11. Tap (4) according to claim 9 or 10, wherein said ends (34) comprise at least one sealing element (98) suitable for obtaining the water seal with the respective seat (38), and wherein relative to said prevailing extension (X), the sealing element (98) is arranged in a portion comprised between the seat (38) and the water collecting and/or mixing means (20).

12. Tap (4) according to any one of the previous claims, wherein the tap body (8) comprises at least one stop (100) suitable for making an axial stop to the introduction of the collecting and/or mixing means (20), and wherein said stop (100) comprises side openings suitable for making seats (38) for locking said delivery ends (34) of the pipes (12).

## Patentansprüche

1. Hahn (4) umfassend
einen Hahnkörper (8) mit einer vorherrschenden Erstreckungsrichtung (X), der zur Aufnahme von Wasser aus wenigstens einem Auslassrohr (12) und zur Abgabe des Wassers durch einen Abgabeauslass (16),
Wassersammel- und/oder Mischmittel (20), die am Einlass mit dem Auslass-rohr (12) in Flüssigkeitsverbindung und am Auslass mit dem Abgabeauslass (16) verbunden sind, wobei der Hahn (4) ein Kuppelelement (30) umfasst, dass zum Festsetzen eines Zuführendes (34) der Rohre (12) mit einer hydraulischen Dichtung und zum Verbinden derselben mit den Wassersammel- und/oder Mischmitteln (20) geeignet ist,
wobei das Kuppelelement (30) wenigstens aus zwei Abschnitten besteht und eine Basis (54) und einen Boden (60) umfasst, die dichtend miteinander ver-bunden sind, wobei die Basis (54) einen Basiskörper (64) umfasst, der we-nigstens ein Flüssigkeitsverbindungsloch (68) mit den zugehörigen Sammel- und/oder Mischmitteln (20) und wenigstens einen Sitz (38), der zur Aufnahme des Zuführendes (34) geeignet ist, aufweist,
wobei der Boden (60) den Sammel- und/oder Mischmitteln (20) gegenüberlie-gend mittels zweiter Fügeverbindungsmittel (86) mit der Basis (54) verbunden ist,
wobei der Boden (60) wenigstens eine Öffnung (78) umfasst, die an einer Seitenwand (80) des Bodens (60) derart offen ist, dass ein seitliches Einführen des Rohrendes (34) ermöglicht ist, und
wobei die Basis (54) mit den Sammel- und/oder Mischmitteln (20) dichtend verbunden ist, wobei am Ende der Sammel- und/oder Mischmitteln (20) die Basis (54) eine Dichtung umfasst, die zum Sicherstellen der Wasserabdich-tung an einer Verbindungswand (7) mit den Sammel- und/oder Mischmitteln (20) geeignet ist,
wobei das Kuppelelement (30) wenigstens einen Sitz (38) umfasst, der zum Erzielen einer formschlüssigen Kupplung mit dem Zuführende (34) der Aus-lassrohre geeignet ist, um eine relative Drehung zwischen dem Zuführende (34) des Rohrs und des Sitzes (38) zu ermöglichen, die eine Axialbewegung des Rohrendes (34) im Sinne des Herausziehens aus dem jeweiligen Sitz (38) verhindert, **dadurch gekennzeichnet,**
**dass** die Basis (54) an der Verbindungswand (70) erste Fügeverbindungsmit-tel (74) umfasst, die zum axialen Verriegeln der Basis (54) mit den Sammel- und/oder Mischmitteln (20) geeignet sind,
wobei sich die Öffnung (78) ausgehend von der Seitenwand (80) nach innen derart verengt, dass das Rohrende (34) in seiner Position axial verriegelt wird.

2. Hahn (4) gemäß Anspruch 1, wobei das Kuppelelement (30) einstückig mit dem Hahnkörper (8) ausgebildet ist.

3. Hahn (4) gemäß Anspruch 1, wobei das Kuppelelement (30) von dem Hahn-körper (8) mechanisch getrennt ist und mit einer Wassersammelkammer (40) des Hahnkörpers (8) verbindbar ist.

4. Hahn (4) gemäß Anspruch 1, 2 oder 3, wobei das Kuppelelement (30) mit den Sammel- und/oder Mischmitteln (20) derart direkt verbunden ist, dass die Flüssigkeitsverbindung zwischen den Rohren (12) und den Sammelmitteln (20) sichergestellt ist.

5. Hahn (4) gemäß irgend einem der vorangehenden Ansprüche, wobei der wenigstens eine Sitz (38) des Kuppelelements (30) entlang der vorherrschenden Erstreckungsrichtung (X) axial derart offen ist, dass ein axiales Einführen des Endes (34) direkt in den Sitz (38) ermöglicht ist.

6. Hahn (4) gemäß irgend einem der Ansprüche 1 bis 5, wobei das Ende (34) eine einschnappende formschlüssige Kupplung oder eine Fügeverbindung bewirkende formschlüssige Kupplung mit dem Sitz (38) bildet.

7. Hahn (4) gemäß irgend einem der vorangehenden Ansprüche, wobei der wenigstens eine Sitz (38) entlang der vorherrschenden Erstreckungsrichtung (X) seitlich derart offen ist, dass ein seitliches Einführen des Endes (34) des Rohrs (12) in den Sitz (38) durch eine äußere Seitenwand (44) des Kuppel-elements (30) ermöglicht ist.

8. Hahn (4) gemäß irgend einem der vorangehenden Ansprüche, wobei das Ende (34) und der Sitz (38) derart gegengleich ausgebildet sind, dass ein Hinterschnitt (50) relativ zur Axialrichtung ausgebildet ist, der zur Erzielung einer Axialverriegelung des Endes (34) des Rohrs und zur Verhinderung einer axialen Ausziehbewegung des Endes (34) aus dem Sitz (38) geeignet ist

9. Hahn (4) gemäß irgend einem der vorangehenden Ansprüche, wobei das Ende (34) einen zylindrischen Abschnitt (90), der zum Einführen in den Sitz (38) geeignet ist, und einen Kragen umfasst, der zum Bilden eines Hinterschnitts (50) zur axialen Festlegung des Endes (34) in dem Sitz (38) geeignet ist.

10. Hahn (4) gemäß irgend einem der Ansprüche 1 bis 8, wobei das Ende (34) einen zylindrischen Abschnitt (90), der zum Einführen in den Sitz (38) geeig-net ist, und eine Ringnut (94) umfasst, die zum axialen Festsetzen des Endes (34) in dem Sitz (38) geeignet ist.

11. Hahn (4) gemäß Anspruch 9 oder 10, wobei die Enden (34) wenigstens ein Dichtungselement (98) umfassen, das zum Erzielen einer Wasserabdichtung mit dem jeweiligen Sitz (38) geeignet ist, und wobei relativ zur vorherrschen-den Erstreckungsrichtung (X) das Dichtungselement (98) in einem Abschnitt angeordnet ist, der zwischen dem Sitz (38) und den Wassersammel- und/oder Mischmitteln (20) vorgesehen ist.

12. Hahn (4) gemäß irgend einem der vorangehenden Ansprüche, wobei der Hahnkörper (8) wenigstens einen Anschlag (100) umfasst, der zum Vorsehen eines axialen Anschlags für das Einführen der Sammel- und/oder Mischmittel (20) geeignet ist, und wobei der Anschlag (100) seitliche Öffnungen umfasst, die zum Bilden von Sitzen (38) zum Verriegeln der Zuführenden (34) der Rohre (12) geeignet sind.

## Revendications

1. Robinet (4) comprenant
- un corps de robinet (8) avec une extension dominante (X) approprié pour recevoir de l'eau d'au moins une conduite d'écoulement (12) et pour la distribuer à travers une ser-tie de distribution (16),
- un moyen de collecte et/ou de mélange d'eau (20) en raccordement fluidique en entrée avec la conduite d'écoulement (12) et en sortie avec la sertie de distribution (16)
dans lequel
le robinet (4) comprend un élément de couplage (30) approprié pour contraindre, avec un joint hydraulique, une extrémité de livraison (34) desdits tuyaux (12) et pour les raccorder audit moyen de collecte et/ou de mélange d'eau (20),
ledit élément de couplage (30) étant composé d'au moins deux portions, et comprenant une base (54) et un fond (60) associés de façon étanche l'un à l'autre, où ladite base (54) comprend un corps de base (64) ayant au moins un trou de raccordement fluidique (68) avec le moyen de collecte et/ou de mélange associable (20) et au moins un siège (38) approprié pour asseoir ladite extrémité de livraison (34),
où le fond (60) est associé à la base (54), à l'opposé du moyen de collecte et/ou de mélange (20), par un deuxième moyen de raccordement (86) de type joint,
où ledit fond (60) comprend au moins une ouver-ture (78) ouverte au niveau d'une paroi latérale (80) du fond (60), de façon à permettre l'intro-duction latérale de l'extrémité de tuyau (34), et
où ladite base (54) est associée de façon étanche au moyen de collecte et/ou de mélange (20), où sur l'extrémité du moyen de collecte et/ou de mélange (20), la base (54) comprend un joint approprié pour assurer l'étanchéité à l'eau au niveau d'une paroi de raccordement (70) avec le moyen de collecte et/ou de mélange (20),
l'élément de couplage (30) comprenant au moins un siège (38) approprié pour obtenir un couplage de forme avec ladite extrémité de livraison (34) des tuyaux d'écoulement, de façon à permettre une rotation relative entre l'extrémité de livraison (34) du siège (38) d'extrémité de tuyau qui empêche un mouvement axial d'extraction de l'extrémité de tuyau (34) du siège (38) concerné, **caractérisé en ce que**
au niveau de la paroi de raccordement (70), la base (54) comprend un premier moyen de raccorde-ment de type joint (74), approprié pour bloquer axialement la base (54) et le moyen de collecte et/ou de mélange (20) l'un contre l'autre,
où ladite ouverture (78) se rétrécit en se déplaçant de la paroi latérale (80) vers l'inté-rieur de façon à bloquer axialement en position l'extrémité de tuyau (34).

2. Robinet (4) selon la revendication 1, dans lequel ledit élément de couplage (30) est soli-daire du corps de robinet (8).

3. Robinet (4) selon la revendication 1, dans lequel ledit élément de couplage (30) est méca-niquement séparé du corps de robinet (8) et peut être associé à une chambre de collecte d'eau (40) du corps de robinet (8).

4. Robinet (4) selon la revendication 1, 2 ou 3, dans lequel ledit élément de couplage (30) est directement associé au moyen de collecte et/ou de mélange (20) de façon à assurer un raccordement fluidique entre les tuyaux (12) et le moyen de collecte (20).

5. Robinet (4) selon l'une quelconque des reven-dications précédentes, dans lequel le au moins un siège (38) de l'élément de couplage (30) est axialement ouvert le long de ladite extension dominante (X), de sorte à permettre une introduc-tion axiale de l'extrémité (34) directement dans le siège (38).

6. Robinet (4) selon l'une quelconque des reven-dications 1 à 5, dans lequel ladite extrémité (34) assure un couplage de forme par emboîtement ou un couplage de forme de type joint avec le siège (38).

7. Robinet (4) selon l'une quelconque des reven-dications précédentes, dans lequel le au moins un siège (38) est latéralement ouvert le long de ladite extension dominante (X), de sorte à per-mettre une introduction latérale de l'extrémité (34) du tuyau (12) dans le siège (38) à travers une paroi latérale externe (44) de l'élément de couplage (30).

8. Robinet (4) selon l'une quelconque des reven-dications précédentes, dans lequel l'extrémité (34) et le siège (38) sont respectivement contre-formés l'un par rapport à l'autre, de façon à déterminer une gorge (50) par rapport à ladite direction axiale, appropriée pour obtenir un blocage axial de l'extrémité (34) du tuyau et pour empêcher un mouvement d'extraction axial de l'extrémité (34) du siège (38) lui-même.

9. Robinet (4) selon l'une quelconque des reven-dications précédentes, dans lequel l'extrémité (34) comprend une portion cylindrique (90) appro-priée pour être insérée dans le siège (38) et un collier approprié pour effectuer une gorge (50) permettant de contraindre axialement l'extrémité (34) au siège (38).

10. Robinet (4) selon l'une quelconque des reven-dications 1 à 8, dans lequel l'extrémité (34) comprend une portion cylindrique (90) appropriée pour être insérée dans le siège (38) et une rai-nure circulaire (94) appropriée pour contraindre axialement l'extrémité (34) au siège (38).

11. Robinet (4) selon la revendication 9 ou 10, dans lequel lesdites extrémités (34) comprennent au moins un élément d'étanchéité (98) approprié pour obtenir le joint étanche à l'eau avec le siège (38) respectif, et où par rapport à ladite extension dominante (X), l'élément d'étanchéité (98) est agencé dans une portion comprise entre le siège (38) et le moyen de collecte et/ou de mélange d'eau (20).

12. Robinet (4) selon l'une quelconque des reven-dications précédentes, dans lequel le corps de robinet (8) comprend au moins une butée (100) appropriée pour constituer une butée axiale à l'introduction du moyen de collecte et/ou de mélange (20), et où ladite butée (100) comprend des ouvertures latérales appropriées pour consti-tuer des sièges (38) pour le blocage desdites extrémités de livraison (34) des tuyaux (12).
